Europäisches Patentamt

European Patent Office

Office européen des brevets

(11) Publication number: **0 338 475**
**A1**

# EUROPEAN PATENT APPLICATION

(21) Application number: 89106814.0

(22) Date of filing: 17.04.89

(51) Int. Cl.⁴: **B63B 1/38**

(30) Priority: 19.04.88 US 183588

(43) Date of publication of application:
25.10.89 Bulletin 89/43

(84) Designated Contracting States:
DE ES FR GB GR IT NL SE

(71) Applicant: **Burg, Donald E.**
**15840 S.W. 84th Avenue**
**Miami Florida 33157(US)**

(72) Inventor: **Burg, Donald E.**
**15840 S.W. 84th Avenue**
**Miami Florida 33157(US)**

(74) Representative: **Baillie, Iain Cameron et al**
**c/o Ladas & Parry Isartorplatz 5**
**D-8000 München 2(DE)**

(54) **Extended bow and controllable air cushion air ride boat hull.**

(57) An improved performance and high stability marine surface vessel that is supported at least in part by a presurized gas cushion where the pressurized gas is supplied to the gas cushion normally by mechanical apparatus such as a powered blower. The pressurized gas cushion is restrained, at least partially, by a recess built into the underside of the hull with significant advancements including a forwardly extending bow member that helps lift the bow over rough seas, water impact relief openings in the sidehulls, movable and optionally remotely controllable stern seal member sections that allow control of recess gas cushion depth, pressure and other gas cushion characteristics, and a control system for a movable stern seal member. The advancements also include a forward movable seal attached structure that greatly increases movable seal life. The above advancements may be used singularly or in various combinations.

FIG.1

This invention relates to the field of marine surface vessels supported at least in part by a pressurized gas cushion where the pressurized gas is supplied to the cushion primarily by artificial means. The pressurized gas cushion is restrained, at least partially, by a recess built into the underside of the hull with particular improvements relating to a forwardly extending bow member that helps lift the bow over rough seas, water impact relief ports in the side hulls, height adjustable stern seal member sections that allow adjustment and control of recess gas cushions, and flexible seal tip adjustment members that greatly increase flexible seal life.

The instant invention is a further improvement to applicant's earlier inventions in this field that are generally entitled "Air Ride Boat Hulls". All of these inventions require the introduction of pressurized gas into a recess in the underside of the boat hull to improve operating speeds and load carrying capabilities due to increased efficiencies, provide superior ride qualities, and provide improved stability.

Much of the background for the current invention is discussed in some detail in applicant's earlier U. S. Patents Nos. 4,392,445 and 4,587,918.

The present invention offers the advantages of previous Air Ride boat hull concepts, as discussed in U. S. Letters Patents 4,392,445 and 4,587,918, coupled with further improvements in stability, ride quality, performance, and flexible seal operation and life.

In the drawings:

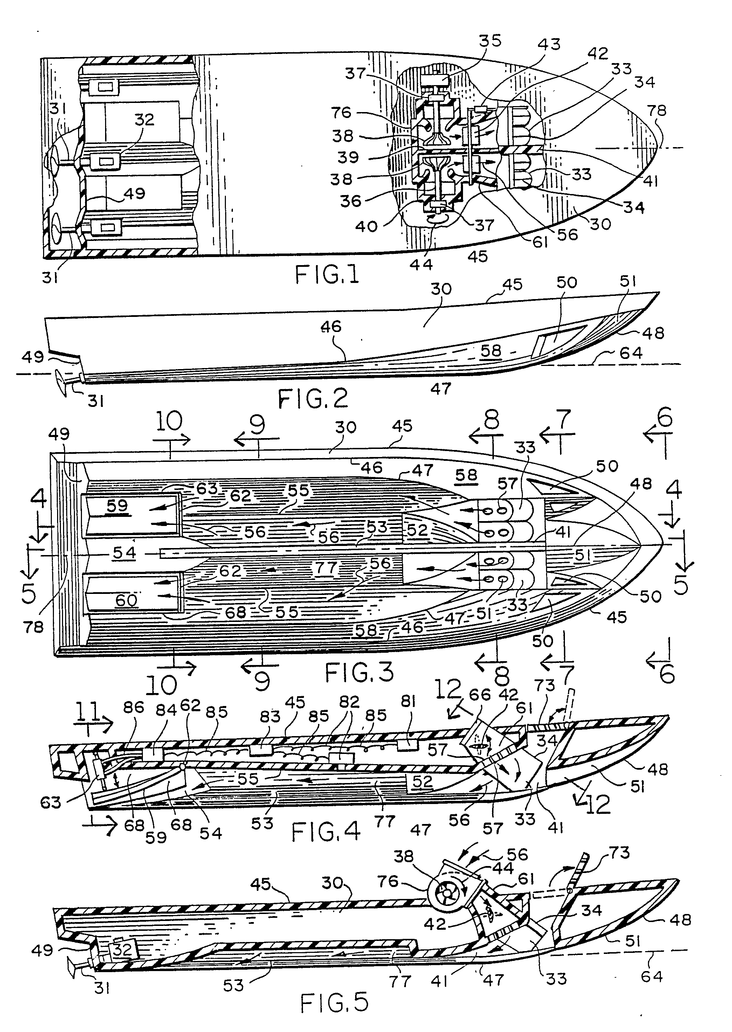

FIG. 1 presents a top partial cutaway view of a boat hull to the present invention that shows typical engine and propulsor, surface propeller drives in the example shown, installations and details of a dual wheel blower including the blower's drive engine and discharge ducts that discharge against the back side of flexible seals. NOtew that the use of separate blower wheels allows the advantage of separate and independent gas cushions in the underside of the hull.

FIG. 2 shows a profile view of a preferred embodiment of the invention which includes a wave impact relief port located in a forward portion of the starboard sidehull shown. The fact that this hull is very appealing to the eye--it looks much like a standard high speed monohull even though it has flexible seals at the forward portion of the gas cushion--is an intended purpose of the prime version of the present invention.

FIG. 3 is a bottom or fish eye view of the preferred embodiment of the invention. Shown are a bow that extends forward of the flexible seal element and hence adds to forward lift when large waves, particularly swells, are encountered and the wave impact relief openings in the sidehulls. Note that a substantially parallel sided center divider is actually an extension of the forward bow and extends aft through the flexible seal elements. Also shown are the gas cushion flexible seals forward and the adjustable portion of the gas cushion rear seal.

FIG. 4 presents a cross sectional view, as taken through line 4-4 of FIG. 3, that shows more details of a flexible seal element installation, a seal removal hatch in the closed position, a blower discharge valve, and details of operation of an adjustable portion of an aft seal member.

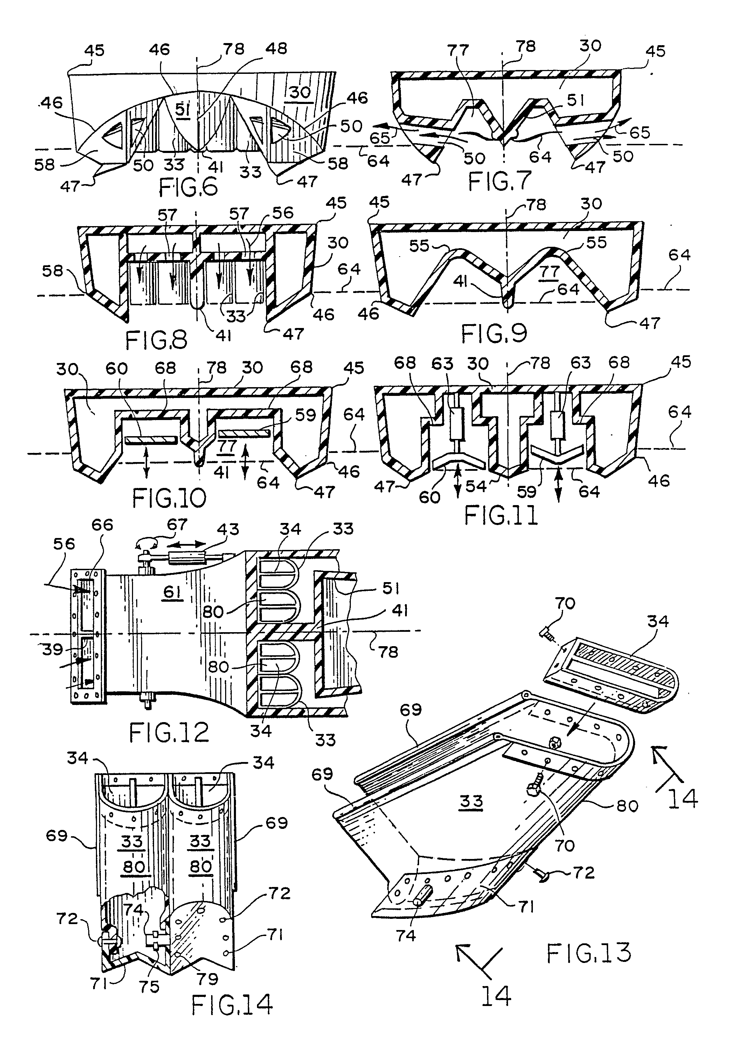

FIG. 5 is a cross sectional view, as taken through line 5-5 of FIG. 3, of a boat to the present invention that shows more details of the blower and propulsor and its engine installation.

FIG. 6 is a forward or bow on view of the hull as taken through line 6-6 of FIG. 3. Shown are a center hull forward, sidehulls including wave impact relief ports or openings, and flexible seals.

FIG. 7 is a cross section, as taken through line 7-7 of FIG. 3, that shows the wave imp]act vents or openings in the sidehulls.

FIG. 8 presents a cross section, as taken through line 8-8 of FIG. 3, that shows flexible seal elements and a substantially parallel side divider, that has extended rearwardly from the forward bow, where the parallel sides of the divider do not impede movement of adjacent flexible seal elements.

FIG.9 shows a typical cross section, as taken through line 9-9 of FIG. 3, of a hull to the preferred embodiment of the instant invention. This cross section shows the double inverted-V shape which is a most desirable variation.

FIG. 10 is a cross section, as taken through line 10-10 of FIG. 3, that gives details of a transverse section in way of a forward portion of an adjustable rear seal element. Note that the adjustable seal elements are substantially planar in this section which is preferred to allow use with a horizontal hinge located just forward of this section.

FIG. 11 presents a cross section, as taken through line 11-11 of FIG. 4, that shows actuators and the shape of typical adjustable rear seal elements. Note that, although the port seal element is shown as an inverted-V and the starboard seal element in V shape for illustrative purposes, port and starboard elements would normally be identical in actual installations.

FIG. 12 is a cross sectional view, as taken through line 12-12 of FIG. 4, that shows the top of a blower discharge duct, including the blower attachment flange, and the top of four individual seal elements.

FIG. 13 shows a typical flexible seal element in an isometric view. Shown are a seal top cap plate, seal side attachment beads, and a seal attachment member, normally rigid or semi-rigid, on the lower portion of the seal. The seal attachment member may include a locating or positioning dowel, show, that extends into an adjacent seal element attachment member.

FIG. 14 presents a frontal view of two flexible seal members, ready for installation, which shows one seal attachment member in cross section. In this case, a locating pin or dowel extends from the seal attachment member on the left into the one shown in cross section on the right. Since some relative movement between the seals is desirable, a large clearance hole for the dowel is provided in the seal on the right. Note that the seal attachment member is designed to plane or otherwise skip across or near the water surface for minimum resistance and minimum pressurized gas leakage. The water contacting seal attachment members greatly increase seal life since most seal wear occurs at the water contacting tips of the flexible seal elements.

With reference to each of the aforementioned Figures in turn, and using like numerals to designate similar parts throughout the several views, a preferred embodiment and several alternative embodiments will now be described.

FIG. 1 discloses the top view of a boat to the inventive hull 30 and its deck line 45 that is partially removed to show three main propulsor engines 32 and propulsor drives 31 with the propulsor drives 31 mounted on drive mount transom 49. Further shown is the hull centerline 78, blower 76, blower housing 40, blower shaft 36, blower wheels or impellers 38, blower wheel divider plate 39, blower rotation arrow 44, air or other gas flow arrows 56, blower drive motor 35, blower discharge duct 61, discharge duct valve 42, valve actuator 43, flexible seals 33, seal top or cap plate 34, and forward bow rearward extension seal separator 41.

FIG. 2 presents a profile view of the inventive hull 30 of FIG. 1 which shows the deck line 45, chine 46, drive mount transom 49, propulsor drive 31, sidehull 58, sidehull keel 47, forward bow 51, and water impact vent or opening 50 in sidehull 58. Note the fine pointed bow that is possible with this concept.

FIG. 3 is a bottom view of the hull 30 which shows the hull centerline 78, deck line 45, chines 46, sidehulls 58, sidehull keels 47, divider 53, air chamber bow 52, peak of chamber inverted-V's 55, water impact relief openings in sidehulls 50, forward bow 51, bow member substantially parallel sided divider 41, air flow arrows 56, air inlet openings 57, and flexible seal or otherwise movable seals 33. In the preferred embodiment of the instant invention, the sidehull keels 47 diverge aft of the forward seals 33 to thus enlarge recess or gas cushion 77 width thus providing for greater cushion lift. Also shown are the controllable or movable aft seal elements 59 (starboard) and 60 (port) as located proximal their their hull insets 68 and attached by hinges 62. Note that, in this particular variation, the controllable aft seal elements 59, 60 are located either side of fixed aft seal member 54. The aft seal member 54 is preferably non-planar, as viewed in a vertical transverse plane of the hull, over at least part of its water contacting portions. It is also possible to extend an aft seal member or members 54 over a majority of recess 77 width if the movable aft seal elements 59, 60 are either minimized or not used.

FIG 4 is a cross sectional view, as taken through line 4-4 of FIG. 3, that shows a forward movable seal 33, seal attachment plate 34, hatch 73 for seal removal as shown in the closed position, blower discharge duct 61, blower flange 66, blower discharge valve 42, and air flow arrows 56. Also shown are a forward bow 51, forward bow keel 48, sidehull keel 47, forward bow extension seal separator member 41, secondary bow 52 located in gas or air cushion 77, gas cushion divider 53, and air inlet openings 57. Also shown are fixed rear seal 54, starboard controllable seal element 59, seal element actuator 63, seal element locating recess 68, and seal element hinge 62.

FIG. 4 also shows hull motion sensor 81 which is normally a pilot gyroscope and/or accelerometer, either of which are commercially available and therefore conventional, recess gas cushion pressure sensor 82 which is normally a commercially available pressure tansducer and therefore conventional, controller 83 which is most commonly a commercially available microprocessor and therefore conventional, and connecting lines or cables 85. Also shown is an actuator control device or module 84 which is most commonly a hydraulic or pneumatic control module system including such items as pumps, valves, accumulators, and the like, not shown to simplify the drawings, that are commercially available and therefore conventional, actuator control lines 86 which may be tubing, electrical lines, or the like, and actuators 63. A variety of actuator systems or devices may be used and included, among others are pneumatic or hydraulic cylinders, gas bags, electric motors, or any other devices suitable for generating and actuator force. The connectors 63 may also be passive systems such as shock absorbers, gas springs or bags that may be supplied with pressurized gas from a gas cushion gas suppy device such as blower 76 of FIG. 1, or the like, and the complete system may include both active and passive connectors 63. A microprocessor 83 is, of course, normally programmed with a software program and there may further be means to adjust microprocessor outputs from a remote controller, not shown but normally mounted in the pilothouse.

FIG. 5 is a cross sectional view, as taken through line 5-5 of FIG. 3 where line 5-5 is slightly to starboard of the hull centerline 78, of a hull 30 that shows a deck 45, forward bow 51, forward bow keel 48, forward bow rearwardly extending seal divider 41, seal removal hatch 73 in the open position, sidehull keel 47, drive mount transom 49, propulsor drive 49, populsor drive motor 32, divider 53, and gas chamber or cushion 77. Also shown is a blower 76, blower wheel 38, blower discharge duct 61, blower rotational arrow 44, blower discharge valve 42, flexible or movable seal 33, and seal top or cap plate 34.

FIG. 6 is a frontal view of the air ride boat hull 30, as seen from line 6-6 of FIG. 3, that shows a forward bow 51, forward bow keel 48, hull centerline 78, chine 46, deck line 45, sidehulls 58, si8dehull water impact relief openings 50, forward movable seals 33, and forward bow rearward extending seal separator 41.

FIG. 7 is a cross sectional view, as taken through line 7-7 of FIG. 3, that shows waterline 64 and water impact flow arrows 65 that show water spray or waves that primarily originate from forward bow 51 where much of the water flow 65 vents or leaves through sidehull openings 50. Also shown is gas cushion 77 hull centerline 78, sidehull keels 47, and deck line 45.

FIG. 8 is a cross sectional view, as taken through line 8-8 of FIG. 3, that shows the hull 30, deck line 45, air flow arrows 56, air openings 57, hull centerline 78, sidehull keels 47, and chines 46. Also shown are forward seals 33, and forward bow rearwardly extending seal divider 41. Note that, in the preferred embodiment of the instant invention, both the inside of the sidehulls 58 and the seal divider 41 have substantially parallel vertical surfaces to facilitate easy movement of adjacent seals 33.

FIG. 9 presents a typical midship cross sectional view of a hull 30, as taken through line 9-9 of FIG. 3, which shows the deck line 45, chines 46, sidehull keels 47, gas chamber 77, inverted-V peaks 55, gas cushion divider 41, hull centerline 78, and waterlines 64. The inverted-V peaks 55 are not necessary to function of the invention and planar or shaped surfaces may be utilized as upper surface shapes for the recess 77. Further, it is not nececessary that the inverted-V peaks 55 physically intersect and they are defined as intersecting if intersections of projections of the angled recess sides occur below a deck line 45 and this is also applicable to the gas cushion substantially rigid aft seal member 54 as shown in FIGS 3 and 11.

FIG. 10 is a cross sectional view of a hull 30, as taken through line 10-10 of FIG. 3, that most importantly shows forward portions of movable or controllable aft seal members, starboard 59 and port 60, as they are optionally located in insets 68 in the hull 30 gas cushion recess 77. In this preferred embodiment of the instant invention, the movable aft seal members 59,60 are substantially planar in their forward sections to facilitate mounting to their forward hinges, or other attachment hardware, where the hinges are shown and discussed under FIG. 3 preceding. Other items show in FIG. 10 include the deck line 45, gas cushion or recess 77 divider 41, sidehull keels 47, chines 47, hull centerline 78 and waterlines 64.

FIG. 11 is a cross sectional view of a hull 30, as taken through line 11-11 of FIG. 4, which notably shows aft portions of movable or controllable aft seal members, starboard 59 and port 60, as they are optionally located in insets 68 in the hull gas cushion recess 77. Note that the starboard movable aft seal member 59 has changed from the forward planar section of FIG. 10 to a V shape and the port movable aft seal member 60 to an inverted-V shape. The shaped members 59,60 shown in FIG. 11 are the preferred embodiments of the instant invention since they present the best wave impact shock reducing shapes compared to the planar shapes. It is preferable, of course, to use identically shaped members both port 60 and starboard 59 and the use of two different shapes here was done for convenience of illustration only. Further, it obviously is possible to utilize constantly shaped, fore to aft, movable aft seal members 59,60 where such shapes can be angled, curved, planar, or combinations of the above. Also shown are typical actuators 63 where such actuators may be controlled so that they can control hull 30 motions. Further items shown are the deck line 45, chines 46, sidehull keels 57, substantially rigid aft seal member 54, and waterline 64. Note that there can be more than one substantially rigid aft seal member 54 and in such case they may be positioned across the width of the air cushion recess 77.

FIG. 12 presents a partial top view of the blower discharge duct 61 area, as taken through line 12-12 of FIG. 4, that shows a blower attachment flange 66, blower discharge air flow arrows 56, blower discharge air splitter plate 39, blower discharge valve actuator 43, and blower discharge valve rotation arrow 67. Also shown are seal top plates 34, seals 33, and a seal separator 41 that in the preferred embodiment is an extension of a forward bow 51.

FIG. 13 illustrates a typical forward seal element assembly 80, that includes seal member 33, optional side bead fasteners 69 that slide into tracks in a hull, not shown. Further shown is a seal element top plate 34, fasteners 70, seal attachment member or wear plate 71, rivet type fasteners 72, and pin or dowel 74. The use of such items as a pin or dowel 74, or other contacting means, is much preferred as this allows attachment of adjacent seals 33 normally by way of their seal attachment members 71. This latter procedure is designed to provide loose fitting constrainment between adjacent seal elements 33 so that seal attachment members 71 will remain side-by-side.

FIG. 14 is a frontal view of two adjacent seal element assemblies 80 with the left hand assembly shown in partial cut away section. Importantly shown are a dowel 74 that extends from the right seal attachment member 71 is restrained by snap ring 75. The opening 79 is made ovesize to allow freedom of movement between the adjacent seal element assemblies 80. Also shown in this figure are the seal top plates 34, seal members 33, seal side beads 69, and rivets 72. Note that the bottoms of the seal attachment members 71 are shaped, in this case as inverted-V's, to allow good water contact as planing surfaces in this preferred embodiment.

While the invention has been described in connection with a preferred and several alternative embodiments, it will be understood that there is no intention to thereby limit the invention. On the contrary. there is intended to be covered all alternatives, modifications and equivalents.

## Claims

1. In an improved boat hull having a recess in its underside, said recess being pressurized with gas supplied by artificial means to create a restrained gas cushion between portions of the hull and a water surface, wherein said gas cushion is of sufficient pressure to support a significant portion of a weight of said boat hull, with a forward portion of said gas cushion restrained by a forward movable seal, the improvement comprising: stabilizing load carrying catamaran like sidehulls beginning at a forward portion of and extending downwardly from the hull where said sidehulls have inside surfaces that are substantially parallel over at least part of their portions that are proximal the gas cushion forward movable seal and where said gas cushion forward movable seal is positioned proximal forward portions of said sidehulls, said sidehull inside surfaces expand outwardly, at least in part, aft of said parallel forward portions, and at least one substantially rigid gas cushion aft seal member where a sum of widths of said gas cushion aft seal members extends over a majority of recess width and said aft seal members' undersides, when viewed in at least one vertical transverse plane of the hull, contain surfaces that are angled to horizontal over a majority of said gas cushion aft seal members' widths.

2. The hull of claim 1 which further comprises a for3wardly extending bow member disposed, at least in part, forwardly of said gas cushion forward movable seal.

3. The forwardly extending bow member of claim 2 wherein the improvement further comprises a seal separator member that, at least in part, passes between elements of said gas cushion forward movable seal, and where said forwardly extending bow member has a bow like shape and is larger in cross section, as viewed in a vertical transverse plane of the hull that passes through said forwardly extending bow member, than the cross section of said seal separator member as viewed in a vertical transvese plane of the hull that passes through said seal separator member.

4. The hull of claim 1 wherein a sidehull includes an opening that penetrates through from inside to outside of the sidehull and that is disposed, at least in part, forward of the gas cushion forward movable seal.

5. The hull of claim 1 wherein the recess is composed of at least two substantially sepaarate compartments that are separated by a divider member that extends over a majority of a length of the recess.

6. The hull of claim 1 wherein the improvement further comprises a hull shaped member that makes up a portion of said presurized gas recess boundary.

7. The hull of claim 1 wherein a substantially rigid gas cushion aft seal member includes at least one substantially inverted V shape as formed by an intersection of recess surfaces when viewed in a vertical transverse plane of the hull with said intersection disposed below a deck line of the hull.

8. The hull of claim 1 which further includes an aft movable seal member where said aft movable seal member makes up at least a portion of a gas cushion aft seal.

9. The aft movable seal member of claim 8 wherein said aft movable seal member, when viewed in at least one vertical transverse plane of the hull, contains surfaces that are angled to horizontal on its underside over a majority of its width.

10. The hull of claim 1 wherein an element of the gas cushion forward movable seal includes a side bead fastener whereby said side bead fastener slides into a track where said track is fastened to the hull and extends over a length of a rear portion of said seal element when said seal element is installed and wherein elements of said movable seal may be removed, with the hull waterborne, by on-board-personnel, through a forward seal removal deck opening, with said seal element deck opening at least partially disposed in a portion of a deck that extends forwardly of a seal element and wherein there is deck structure proximal to and, at least in part, directly forward of said seal removal deck opening.

11. In an improved boat hull having a recess in its underside, said recess being pressurized with gas supplied by artificial means to create a restrained gas cushion between portions of the hull and a water surface, wherein said gas cushion is of sufficient pressure to support a significant portion of a weight of said boat hull, with a forward portin of said gas cushion restrained by a forward movable seal, the improvement comprising: stabilizing, load carrying catamaran like sidehulls beginning at a forward portion of and extending downwardly from the hull, said forward movable seal positioned proximal forward portions of said sidehulls, said sidehulls having inside surfaces that are substantially parallel over at least a portion of their length that is proximal said forward movable seal, a forwardly extending bow member disposed, at least in part, forwardly of said gas cushion forward movable seal, wherein said forwardly extending bow member is connected to a seal separator member that, at least in part, passes between elements of said gas cushion forward movable seal, and wherein said seal separator member has substantially parallel sides over at least a portion of its length that is proximal portions of said forward movable seal, and wherein said forwardly extending bow member has a bow like shape that is larger in cross section, as viewed in a vertical transvese plane of the hull that passes through said forwardly extending bow member, than a cross section as viewed in a vertical transverse plane of the hull that passes through said seal separator member, of said seal separator member.

12. The hull of claim 11 wherein a sidehull includes an opening that penetrates through from inside to outside of the sidehull and that is disposed. at least in part, forward of the gas cushion forward movable seal.

13. The hull of claim 11 wherein said sidehull inside surfaces expand outwardly, at least in part, aft of said sidehull parallel forward portions.

14. The hull of claim 11 wherein the recess is composed of at least two substantially separate compartments that are separated by a divider member that extends over a majority of a length of the recess.

15. The hull of claim 11 wherein the improvement further comprises a hull shaped member that makes up a portion of said presurized gas recess boundary.

16. The hull of claim 11 wherein the improvement further comprises at least one substantially rigid gas cushion aft seal member where a sum of widths of said gas cushion aft seal members extends over a majority of recess widths and said aft seal members, undersides, when viewed in at least one vertical transverse plane of the hull, contain surfaces that are angled to horizontal over a majority of said gas cushion aft seal members widths.

17. The hull of claim 16 wherein a substantially rigid gas cushion aft seal member includes at least one substantially inverted V shape as formed by an intersection of recess surfaces when viewed in a vertical transverse plane of the hull with said intersection disposed below a deck line of the hull.

18. The hull of claim 11 which further includes an aft movable seal member, where said aft movable seal member makes up at least a portion of a gas cushion aft seal.

19. The aft movable seal member of claim 18 wherein said aft movable seal member, when viewed in at least one vertical transverse plane of the hull, contains surfaces that are angled to horizontal on its underside over a majority of its width.

20. The hull of claim 11 wherein an element of the gas cushion forward movable seal includes a side bead fastener whereby said side bead fastener slides into a track where said track is fastened to the hull and extends over a length of a rear portion of said seal element when said seal element is installed and wherein elements of said movable seal may be removed, with the hull waterborne, by on-board-personel, through a forward seal removal deck opening, with said seal element deck opening at least partially disposed in a portion of a deck that extends forwardly of a seal element and wherein there is deck structure proximal to and, at least in part, directly forward of said seal removal deck opening.

21. In an improved boat hull having a recess in its underside, said recess being pressurized with gas supplied by artificial means to create a restrained gas cushion between portions of the hull and a water surface, wherein said gas cushion is of sufficient pressure to support a significant portion of a weight of said boat hull, with a forward portion of said gas cushion restrained by a forward movable seal, the improvement comprising: stabilizing, load carrying catamaran like sidehulls beginning at a forward portion of and extending downwardly from the hull, said gas cushion forward movable seal positioned proximal forward portions of said sidehulls, a forwardly extending bow member disposed, at least in part, forwardly of said gas cushion forward movable seal, and at least one substantially rigid gas cushion aft seal member where a sum of widths of said gas ushion aft seal members extends over a majority of recess widths and said aft seal member, undersides, when viewed in at least one vertical transverse plane of the hull, contain surfaces that are angled to horizontal over a majority of said gas cushion aft seal members, widths.

22. The forwardly extending bow member of claim 21 wherein the improvement further comprises a seal separator member that, at least in part, passes between elements of said gas cushion forward movable seal, and wherein said forwardly extending bow member has a bow like shape and is larger in cross section, as viewed in a vertical transverse plane of the hull that passes through said forwardly extending bow member, than the cross section of said seal separator member as viewed in a vertical transverse plane of the hull that passes through said seal separator member.

23. The hull of claim 21 wherein a sidehull includes an opening that penetrates through from inside to outside of the sidehull and that is disposed, at least in part, forward of the gas cushion forward movable seal.

24. The hull of claim 21 wherein inside surfaces of said sidehulls expand outwardly, at least in part, aft of their forward portions that are proximal said forward movable seal.

25. The hull of claim 21 wherein the recess is composed of at least two substantially separate compartments that are separated by a divider member that extends over a majority of a length of the recess.

26. The hull of claim 21 wherein the improvement further comprises a hull shaped member that makes up a portion of said pressurized gas recess boundary.

27. The hull of claim 21 wherein a substantially rigid gas cushion aft seal member includes at least one substantially inverted V shape as formed by an intersection of recess surfaces when viewed in a vertical transverse plane of the hull with said intersection disposed below a deck line of the hull.

28. The hull of claim 21 which further includes an aft movable seal member where said aft movable seal member makes up at least a portion of a gas cushion aft seal.

29. The aft movable seal member of claim 28 wherin said aft movable seal member, when viewed in at least one vertical transverse plane of the hull, contains sufaces that are angled to horizontal on its underside over a majority of its width.

30. The hull of claim 21 wherein an element of the gas cushion forward movable seal includes a side bead fastener whereby said side bead fastener slides into a track where said track is fastened to the hull and extends over a length of a rear portion of said seal element when said seal element is installed and wherein elements of said movable seal may be removed, with the hull waterborne, by on-board-personnel, through a forward seal removal deck opening, with said seal element deck opening at least partially disposed in a portion of a deck that extends forwardly of a seal element and wherein ther is deck structure proximal to and, at least in part, directly forward of said seal removal deck opening.

31. In an improved boat hull having a recess in its underside, said recess being pressurized with gas supplied by artificial means to create a restrained gas cushion between portions of the hull and a water surface, wherein said gas cushion is of sufficient presure to support a significant portion of a weight of said boat hull, with a forward portion of said gas cushion restrained by a forward movable seal, the improvement comprising: a side bead fastener on an element of the forward movable seal whereby said side bead fastener slides into a track where said track is fastened to the hull and extends over a length of a rear portion of said side bead fastener, and wherein elements of said movable seal may be removed, with the hull waterborne, by on-board-personnel, through a forward seal removal deck opening, with said seal element deck opening at least partially disposed in a portion of a deck that extends forwardly of a seal element and wherein there is deck structure proximal to and, at least in part, directly forward of said seal removal deck opening.

32. The improved boat hull of claim 31 wherein there is a forward movable seal element top cap attachment means that, at least in part, attaches a seal element to the hull.

33. The improved boat hull of claim 31 wherein said seal element further comprises attached structure proximal said forward movable seal element lower portions, said attached structure including a water contacting surface, and said attached structure being in movable attachment with an attached structure on an adjacent seal element.

FIG.1

FIG.2

FIG.3

FIG.4

FIG.5

FIG.6

FIG.7

FIG.8

FIG.9

FIG.10

FIG.11

FIG.12

FIG.13

FIG.14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 706 903 (BURG)<br>* Pages 7-13; figures 1-4,9,13 *<br><br>--- | 1,5,6,8<br>-10,11,<br>14,15,<br>18-21,<br>25,26,<br>28,30- | B 63 B    1/38 |
| A | US-A-3 027 860 (PRIEST)<br>* Column 2, lines 45-72; column 3;<br>column 4, lines 1-9,58-63; figures 1-5<br>*<br><br>--- | 1,5,6,<br>11,15,<br>21,31 | |
| A | US-A-3 981 260 (HILBIG)<br>* Abstract; figures *<br>--- | 1 | |
| A | CH-A- 495 248 (KUMMERMAN)<br>* Column 3, lines 8-40; figures 1,3-7 *<br>--- | 1 | |
| A | US-A-3 338 205 (LEAVITT)<br>* Column 3; figures 3,4 *<br>----- | 4 | |
| | | | TECHNICAL FIELDS SEARCHED (Int. Cl.4) |
| | | | B 63 B |

The present search report has been drawn up for all claims

| Place of search | Date of completion of the search | Examiner |
|---|---|---|
| THE HAGUE | 28-07-1989 | VISENTIN, M. |